Europäisches Patentamt

European Patent Office

Office européen des brevets

(19)

(11) Veröffentlichungsnummer : **0 379 651 B1**

## (12) EUROPÄISCHE PATENTSCHRIFT

(45) Veröffentlichungstag der Patentschrift :
**29.07.92 Patentblatt 92/31**

(51) Int. Cl.$^5$ : **A47J 31/40**

(21) Anmeldenummer : **89119684.2**

(22) Anmeldetag : **24.10.89**

(54) **Kaffeemaschinenautomat.**

(30) Priorität : **23.12.88 DE 3843568**

(43) Veröffentlichungstag der Anmeldung :
**01.08.90 Patentblatt 90/31**

(45) Bekanntmachung des Hinweises auf die
Patenterteilung :
**29.07.92 Patentblatt 92/31**

(84) Benannte Vertragsstaaten :
**AT BE CH DE GB LI NL SE**

(56) Entgegenhaltungen :
**EP-A- 0 000 685**
**WO-A-82/01120**
**CH-A- 597 812**

(56) Entgegenhaltungen :
**FR-A- 2 395 730**
**GB-A- 1 257 604**
**GB-A- 2 019 202**
**GB-A- 2 162 419**
**US-A- 2 827 845**
**US-A- 3 551 164**

(73) Patentinhaber : **HGZ Maschinenbau AG**
**Industriestrasse 34**
**CH-8108 Dällikon - ZH (CH)**

(72) Erfinder : **Sager, Peter**
**Rehbergstrasse 25**
**CH-8113 Boppelsen (CH)**

(74) Vertreter : **Rehberg, Elmar, Dipl.-Ing.**
**Postfach 3162 Am Kirschberge 22**
**W-3400 Göttingen (DE)**

## Beschreibung

Die Erfindung bezieht sich auf einen Kaffeemaschinenautomaten, insbesondere für Einzeltassen- und Kännchenfertigung, mit einem ein Gehäuse aufweisenden Durchlauferhitzer für die Bereitstellung von Heißwasser, mit einer Einrichtung zur Zufuhr von Kaffeepulver, mit einer Brühvorrichtung, die einen aus einem stationär mit vertikaler Achse angeordneten Rohrabschnitt sowie zwei Verschlußstücken gebildeten Brühraum aufweist, der zumindest teilweise in dem Durchlauferhitzer angeordnet ist und bei dem zumindest ein Teil des Rohrabschnitts des Brühraums von dem Heißwasser des Durchlauferhitzers umspült ist, und mit einem Axialantrieb für die Bewegung des oberen Verschlußstücks in Richtung der Achse des Rohrabschnitts sowie einem Radialantrieb für die Bewegung radial zu dieser Achse.

Unter einem Kaffeemaschinenautomaten wird eine Maschine verstanden, bei der die Vorgänge des Mahlens des Kaffeepulvers, des Einbringens des Kaffeepulvers in den Brühraum, der Brühvorgang selbst und der Ausstoß des ausgelaugten Kaffeepulvers sowie das Ausschieben der ausgelaugten und ausgepreßten Tablette von Kaffeepulver automatisch erfolgen, ohne daß einer dieser oder weiterer Verfahrensschritte manuell ausgelöst oder unterstützt werden müßten. Es versteht sich aber, daß der Kaffeemaschinenautomat zur Durchführung eines Zyklusses durch Drücken eines Schalters oder ähnlich in Gang gesetzt werden muß. Die Erfindung ist auch auf einen Mengenfrischbrühautomaten anwendbar.

Ein Kaffeemaschinenautomat der eingangs beschriebenen Art ist aus der US-PS 2 827 845 bekannt. Dieser weist den bedeutenden Vorteil auf, daß der aus einem Rohrabschnitt gebildete, mit vertikaler Achse angeordnete Brühraum zumindest teilweise bereits in dem Gehäuse des Durchlauferhitzers angeordnet ist, so daß damit eine weitgehende Konstanz der Auslauftemperatur des Kaffeegetränks unabhängig von der zeitlichen Abfolge einzelner Brühzyklen erreicht wird. Die Brühfrequenz ist also ohne Einfluß auf die Auslauftemperatur. Die dortige Brühvorrichtung weist bereits ein oberes Verschlußstück auf, welches über den gleichen Antrieb sowohl radial zur Achse des Rohrabschnitts des Brühraums als auch in Richtung der Achse des Rohrabschnitts verfahrbar angeordnet ist.Das Verschlußstück selbst ist kegelförmig ausgebildet und mit einer Dichtung versehen, die lediglich die Funktion des Abdichtens des Brühraums nach oben erfüllt. Die radiale Verfahrbarkeit ist vorteilhaft nutzbar, damit die Öffnung des Brühraums nach oben für das Einfüllen des Kaffeepulvers ohne Weiteres zugänglich ist und damit die Kaffeemühle stationär oberhalb dieser Öffnung angeordnet werden kann. Der Brühraum weist auch ein unteres Verschlußstück auf, welches um eine horizontale Achse schwenkbar gelagert ist und ebenfalls kegelförmig ausgebildet und mit einer Dichtung versehen ist. Im Bereich dieses unteren Verschlußstücks befindet sich auch der Einlaß für das Heißwasser in den Brühraum. Insoweit bereitet die Zufuhr des Heißwassers keine Probleme, und zwar weder im unteren Bereich des Rohrabschnitts, noch im Bereich des oberen Verschlußstücks. Ein solcher Brühraum mit kegelförmigen Verschlußstücken hat jedoch den Nachteil, daß es nicht möglich ist, diese kegelförmigen Verschlußstücke in dem Rohrabschnitt kolbenartig zu bewegen und beispielsweise das lose, eingefüllte Kaffeepulver zu einer Tablette vorzupressen, was den Vorteil der besseren und gleichmäßigeren Ausnutzung des Kaffeepulvers erbringen würde. Es ist auch nicht möglich, eine solche Tablette nach dem Auslaugen nach- bzw. trockenzupressen und damit einen Trockenauswurf zu verwirklichen.

Ein weiterer Kaffeemaschinenautomat ist aus der WO 82/01120 bekannt. Der Brühraum aus einem stationär angeordneten Rohrabschnitt mit vertikaler Achse ist dort innerhalb einer Trägerplatte vorgesehen, die über eine Führungsstangen aufweisende Konstruktion mit einer zweiten Trägerplatte verbunden ist. In der zweiten Trägerplatte sind hydraulisch betätigbare Kolben/Zylinder-Einheiten vorgesehen, mit deren Hilfe zwei kolbenartige Verschlußstücke an jedem Ende des Rohrabschnitts in diesen einfahrbar bzw. in dem Rohrabschnitt bewegbar sind. Während das untere Verschlußstück direkt über die zugehörige Kolben/Zylinder-Einheit betätigt wird, wird die Kraft für das obere Verschlußstück über eine jochartige Konstruktion umgeleitet bzw. aufgebracht. Beide Verschlußstücke sind nur axial bewegbar. Zusätzlich ist ein verschwenkbares Trichterstück vorgesehen, welches dem Einbringen des gemahlenen Kaffeepulvers von der Seite her in den Brühraum und dem Abtransport der ausgelaugten Tablette Kaffeepulver aus dem Brühraum dient. Demzufolge ist auch die Kaffeemühle so außerhalb der Achse des Brühraums angeordnet, daß das Trichterstück in der ausgeschwenkten Stellung über die Mühle befüllbar ist. Abgesehen davon, daß diese Konstruktion des Brühraums sehr aufwendig ist, ist es auch nachteilig, daß das obere Verschlußstück mit seiner Dichtung durch das verschwenkbare Trichterstück hindurchbewegt werden muß, wodurch die Dichtung an der Kante des vertikalen Rohrabschnitts in diesen hinein und aus diesem wieder herausgefahren wird. Dies verkürzt die Lebensdauer der Dichtung und damit die ordnungsgemäße Funktion eines solchen Kaffeemaschinenautomaten erheblich. Allerdings ist auch hier das obere Verschlußstück einteilig ausgebildet, so daß die Zufuhr des Heißwassers im Bereich des oberen Verschlußstücks problemlos geschehen kann. Irgendeiner Zentrierwirkung kann das Verschlußstück jedoch nicht unterliegen. Es ist vielmehr eine genaue Führung der Stangenkonstruktion erforderlich, um die Funktionsfähigkeit der Dichtung wenigstens über einen entsprechend kleinen Zeitraum aufrechtzuerhalten.

Aus der CH-PS 597 812 ist es bereits bekannt, das obere Verschlußstück eines Brühraums zweiteilig auszubilden und auch im Bereich dieses Verschlußstücks das Heißwasser in den Brühraum einzuleiten. Es sind hier auch bereits zwei Dichtungen vorgesehen, wovon die eine Dichtung die Abdichtung des Brühraums nach außen erbringt, während die andere Dichtung der Abdichtung des Heißwassereintritts in den Brühraum dient. Dabei ist dieses obere Verschlußstück radial zur vertikalen Achse des Brühraums verfahrbar, wobei zum Zwecke des Verfahrens nur die eine Dichtung entlastet wird, die umgekehrt beim Einlassen des Heißwassers in den Brühraum angepreßt wird. Beim radialen Verfahren des oberen Verschlußstücks schleift jedoch die entlastete Dichtung in nachteiliger Weise auf einer entsprechenden Fläche, so daß hier sich entsprechender Verschleiß einstellt.

Die EP 100 030 A2 zeigt eine Kaffeemaschine mit radialer Pulverzubringung, wobei das obere Verschlußstück lediglich axial verfahrbar in der Achse des Rohrabschnitts des Brühraums vorgesehen ist. Auch dabei müssen mit Dichtungen in nachteiliger Weise Kanten überfahren werden, was die Lebensdauer dieser Dichtungen entsprechend verkürzt. Auch die DE 36 15 158 C1 zeigt eine Kaffeemaschine, bei der ein Rohrabschnitt mit vertikaler Achse wesentlicher Bestandteil der Brühvorrichtung ist. Es ist ein oberes Verschlußstück vorgesehen, welches mit seiner Dichtung in den Rohrabschnitt einfährt bzw. aus diesem wieder ausfährt. Dieses obere Verschlußstück ist einteilig ausgebildet und gestattet somit problemlos auch die Heißwasserzufuhr. Das untere Verschlußstück ist verschwenkbar vorgesehen, um den Ausstoß des Kaffeepulvers nach unten zu ermöglichen. Bei diesem radialen Verschwenken reibt die Fläche an der Dichtung des unteren Verschlußstücks, so daß sich hier entsprechender Verschleiß einstellt. Da dies im unteren Bereich des Brühraums der Fall ist, tropft hier die Kaffeebrühe nach unten heraus. Auch im oberen Bereich ergeben sich durch das Einfahren und Überfahren von Kanten des Rohrabschnitts Dichtprobleme.

Der Erfindung liegt die Aufgabe zugrunde, einen Kaffeemaschinenautomaten der eingangs beschriebenen Art unter Beibehaltung seiner vorteilhaften Möglichkeiten der einfachen Einbringung des Kaffeepulvers, des Vorpressens einer Tablette aus dem Kaffeepulver bis hin zu dem Trockenausstoß der ausgelaugten Tablette beizubehalten, jedoch alles zu vermeiden, was die Funktion der Dichtungen im Bereich des oberen und unteren Verschlußstücks im Sinn eines Langzeitbetriebs beeinträchtigen könnte. Dabei muß es insbesondere vermieden werden, mit Dichtungen in zylindrische Flächen hinein und aus diesen herauszufahren. Es sollen keine Bohrungen überfahren werden und es soll das Schleifen von Dichtungen beim Radialtransport von Verschlußstücken vermieden werden. All diese Maßnahmen zielen auf eine Erhöhung der Lebensdauer der Dichtungen des Brühraums und damit auf die Vergrößerung der Inspektions- und Wartungsintervalle derartiger Kaffeemaschinenautomaten ab.

Erfindungsgemäß wird dies dadurch erreicht, daß das obere Verschlußstück den Einlaß für das Heißwasser in den Brühraum trägt, daß das obere Verschlußstück zweiteilig ausgebildet ist und aus einem Tragteil und einem zumindest teilweise kegelförmigen Zentrierteil besteht, der eine einzige Dichtung für den Abschluß des Brühraums einerseits sowie für die Abdichtung des Einlasses des Heißwassers andererseits trägt, daß der Zentrierteil an dem Tragteil sowohl axial als auch radial begrenzt beweglich gelagert ist, daß die Dichtung einen solchen Durchmesser aufweist und in Abstimmung auf den oberen Rand des Rohrabschnitts so ausgebildet ist, daß bei Betätigung des an dem Tragteil angreifenden Axialantriebs sich die Dichtung nach ihrer Zentrierung durch den Zentrierteil auf den oberen Rand als Anschlag und Ventilsitz aufsetzt und dabei gleichzeitig der Brühraum einerseits und der Einlaß des Heißwassers andererseits abdichtet, und daß das untere Verschlußstück nach Art eines Kolbens ausgebildet ist und mit seiner Dichtung ausschließlich innerhalb des Rohrabschnitts durch einen Vertikalantrieb verfahrbar vorgesehen ist.

Das obere Verschlußstück weist somit nur eine Dichtung auf und das untere Verschlußstück weist ebenfalls nur eine Dichtung auf. Die an dem oberen Verschlußstück angeordnete Dichtung fährt nie in die zylindrische Fläche des Rohrabschnitts des Brühraums hinein, sondern legt sich nur an den oberen Rand des Rohrabschnitts an, der dabei als Ventilsitz und als Anschlag wirkt. Die Dichtung des unteren Verschlußstücks hingegen fährt niemals aus dem Rohrabschnitt heraus, sondern bewegt sich ausschließlich innerhalb der zylindrischen Fläche des Rohrabschnitts, so daß hier die Langlebigkeit gegeben ist. Durch die Kombination dieser beiden Anbringungs- und Ausbildungsmöglichkeiten der Dichtungen wird gleichzeitig der Vorteil erreicht, daß das obere Verschlußstück gleichsam in seiner Dichtstellung eine stillstehende Wand bildet, gegen die das untere Verschlußstück im Rohrabschnitt nach Art eines Kolbens in alle möglichen Zwischenstellungen verfahren werden kann. Damit ist es vorteilhaft möglich, zunächst einmal von oben Kaffeepulver in den Brühraum einzufüllen, wenn das obere Verschlußstück radial von der oberen Öffnung weggefahren ist. Da das untere Verschlußstück immer im Bereich des Rohrabschnitts verbleibt, ist dabei schon während des Einfüllens des Kaffeepulvers der Brühraum unten geschlossen. Anschließend kann das obere Verschlußstück zunächst radial und dann axial verfahren werden, bis seine Dichtung auf dem Rand des Rohrabschnitts aufsitzt. Diese Dichtung erfüllt dabei zwei Dichtfunktionen, indem einmal der Brühraum nach außen und zum anderen der Heißwassereinlaß in den Brühraum abgedichtet wird. Bevor dies jedoch geschieht, kann mit dem unteren Verschlußstück durch entspre-

EP 0 379 651 B1

chendes axiales Verfahren aus dem lose eingefüllten Kaffeepulver eine Tablette vorgepreßt werden, die einen mehr oder weniger stabilen Körper gleicher Dicke darstellt, so daß die von dem Heißwasser zurückzulegenden Wege durch diese Tablette überall gleich sind und damit eine gleichmäßige Auslaugung des Kaffeepulvers stattfindet. Dies geschieht nach dem Vorpressen der Tablette in einem Stadium, in dem die Tablette wieder etwas entlastet wird, wobei dabei das untere Verschlußstück etwas nach unten verfahren wird.

Die erfindungsgemäße Ausbildung läßt es ohne Weiteres auch zu, verschieden große Kafffeepulvermengen zur Anwendung zu bringen, weil das untere Verschlußstück nach Art eines Kolbens ohne Weiteres entsprechend gesteuert und verfahren werden kann.

Besonders bedeutsam für eine lange Lebensdauer ist jedoch die Ausbildung des oberen Verschlußstücks im einzelnen. An dessen Tragteil ist das Heißwasser mit Hilfe eines Schlauchs angeschlossen. Das radiale Spiel zwischen Zentrierteil und Tragteil wird für eine Selbstzentrierung des Zentrierteils bei einer axialen Bewegung ausgenutzt, so daß sich das Zentrierteil unabhängig von einwirkenden Temperaturdifferenzen und Herstellungsgenauigkeiten der Führung des oberen Verschlußstücks sich jeweils paßgenau auf den Rand des Rohrabschnitts aufsetzt. Da das Zentrierteil auch die einzige Dichtung trägt, wird über diese Selbstzentrierung zugleich die richtige Lage der Dichtung gegenüber dem Rand des Rohrabschnitts erreicht. Dies ist wiederum Voraussetzung für einen dichten Abschluß des Brühraums nach außen, und zwar trotz der axialen Beweglichkeit des Verschlußstücks. Zugleich wird aber auch durch die Zweiteiligkeit des oberen Verschlußstücks die Möglichkeit geschaffen, in der abgehobenen Stellung die zwischen dem Tragteil und dem Zentrierteil eingeschaltete Dichtung zu entspannen, so daß das Zentrierteil seine Selbstzentrierung bei sehr geringer Reibung ausführen kann und die Dichtung dabei nicht auf einer Fläche gleitet. Durch die axiale Beweglichkeit des Zentrierteils gegenüber dem Tragteil wird dies ermöglicht. Darüberhinaus ist das gesamte obere Verschlußstück gemeinsam axial verfahrbar, so daß bei der nachfolgenden radialen Bewegung die Dichtung ebenfalls ohne Kontakt zu irgendeiner Reibfläche ist.

Die Ausbildung des unteren Verschlußstücks mit seiner Verfahrbarkeit in dem Rohrabschnitt und die radiale Verfahrbarkeit des oberen Verschlußstücks gestatten auch den Trockenauswurf, da das untere Verschlußstück so weit in dem Rohrabschnitt verfahrbar ist, daß die ausgelaugte Tablette nach oben aus dem Rohrabschnitt austritt und das obere Verschlußstück durch eine radiale Bewegung dazu ausgenutzt werden kann, die Tablette oben aus der Achse seitlich herauszuschieben. Der Radialantrieb des oberen Verschlußstücks hat also ebenfalls Mehrfachfunktion.

Das obere Verschlußstück kann mit seinem Tragteil zweckmäßig auf einem Schlitten gelagert und über den Radialantrieb über die Öffnung des Rohrabschnitts bzw. radial weg von dieser Öffnung verfahrbar sein. Dies ermöglicht nicht nur das seitliche Wegschieben einer ausgelaugten Tablette Kaffeepulvers, sondern stellt gleichsam sicher, daß die Einrichtung zur Zufuhr von Kaffeepulver, also beispielsweise eine Kaffeemühle oder ein Pulver-Dosieraggregat genau oberhalb der Achse des Rohrabschnitts des Brühraums angeordnet werden können, so daß das Einfüllen, welches im freien Fall erfolgt, problemlos möglich ist und sich die Teile nicht gegenseitig stören.

Der Axialantrieb und der Radialantrieb können voneinander unabhängig sein, wobei der Axialantrieb auf dem Schlitten und damit radial mitfahrend vorgesehen sein kann. Damit können vorteilhaft diese beiden Antriebe je nach der gewünschten Funktion unabhängig voneinander gesteuert werden. So ist es möglich, z. B. nach einem Setzen der einzigen Dichtung den Axialantrieb in seinem Hub etwas nachzustellen, um die ursprüngliche Dichtkraft wiederherzustellen.

Der Tragteil kann auf seiner dem Zentrierteil zugekehrten Seite eine umlaufende Nut für die Verteilung des Heißwassers aufweisen, die an mehrere Durchbrechungen im Zentrierteil anschließt; das Zentrierteil trägt auf seiner dem Brühraum zugekehrten Seite ein Sieb für den Übertritt des Heißwassers in den Brühraum. Bei dieser Ausbildung wird eine gleichmäßige Verteilung des Heißwassers über den Querschnitt des Brühraums bzw. die Tablette aus Kaffeepulver erreicht. Die umlaufende Nut und die Durchbrechungen werden durch die Dichtfunktion der einen Dichtung nach außen abgeschlossen.

Der obere Rand des Rohrabschnitts des Brühraums kann abgerundet und die zugehörige Dichtung der Fläche kegelförmig ausgebildet sein. Damit bildet der obere Rand des Rohrabschnitts einen sauberen Ventilsitz und es findet mehr oder weniger eine linienförmige Berührung zwischen Dichtung und Rand in der Schließstellung statt, wobei sich auch hier die Zentrierwirkung des Zentrierteils bemerkbar macht. Es ist aber auch möglich, die Ausbildung umgekehrt vorzusehen, also den Rand kegelförmig zu gestalten und die Dichtung abzurunden.

Der Axialantrieb des oberen Verschlußstücks kann einen Exzenter aufweisen und zwischen dem Schlitten und dem Tragteil können ein oder mehrere Säulenführungen parallel zur Achse des Rohrabschnitts vorgesehen sein. Damit ist sichergestellt, daß einerseits ein sehr einfacher Antrieb, beispielsweise ein Gleichstrommotor, zur Realisierung des Axialantriebs des oberen Verschlußstücks eingesetzt werden kann. Zum anderen verhindert die Säulenführung des Tragteils ein Verkippen bei Einwirkung der entsprechenden Kräfte über den

<div align="center">4</div>

Exzenter. Hierdurch ist auch eine gleichmäßige Anpressung der Dichtung in der Dichtstellung zwischen Tragteil und Zentrierteil gegeben.

Der Zentrierteil selbst kann einen Dichtungsträger aufweisen, der die Durchbrechungen für den Durchtritt des Heißwassers trägt, über eine Anschlagschraube mit radialem und axialem Spiel an dem Tragteil gelagert ist und das Sieb aufnimmt. Dies ergibt eine sehr flache Bauweise des Zentrierteils, die praktisch nur aus der Höhe des Siebs und der Höhe der Dichtung zusammengesetzt ist, so daß die axiale Bewegung des oberen Verschlußteils in ihrem Hub sehr klein gehalten werden kann, was wiederum vorteilhaft zu einer geringen Bauhöhe des gesamten Kaffeemaschinenautomaten beiträgt. Außerdem wirkt sich diese geringe Bauhöhe auch insoweit vorteilhaft aus, als die Einrichtung zur Zufuhr des Kaffeepulvers nicht sehr hoch über der Öffnung des Rohrabschnitts ortsfest angeordnet werden muß.

Der Vertikalantrieb des unteren Verschlußstücks kann einen doppelt wirkenden Hydraulikkolben aufweisen, durch den die Lage des unteren Verschlußstücks relativ zu dem oberen stillstehenden Verschlußstück entsprechend allen Arbeitsstellungen wie Befüllen mit Kaffeepulver, Vorpressen einer Tablette aus Kaffeepulver, Entspannen, Brühen, Auspressen und Ausschieben der Tablette eingestellt wird. Auch dieser Vertikalantrieb wird damit zur Erbringung mehrerer Funktionen herangezogen. Er ermöglicht es außerdem, auf ein axiales Einfahren des oberen Verschlußstücks in den Rohrabschnitt zu verzichten.

Der den Brühraum bildende Rohrabschnitt kann im Unterteil des Gehäuses des Durchlauferhitzers vorgesehen sein, wobei an dem unteren Verschlußstück der Auslaß für das Kaffeegetränks vermittels eines Schlauchs angeschlossen ist. Damit ist der Rohrabschnitt wie auch das untere Verschlußstück platzsparend untergebracht und wird mit der Erwärmung des Heißwassers ebenfalls bereits auf entsprechende Temperatur erwärmt, so daß die Auslauftemperatur des Kaffeegetränks nicht nachteilig beeinflußt wird. Durch die Zwischenschaltung eines Schlauchs ist es trotzdem möglich, das Kaffeegetränk über ein stillstehendes Rohr in die Tasse oder das Kännchen ausfließen zu lassen.

Oberhalb des Brühraums kann eine Kaffeemühle als Einrichtung zur Zufuhr von Kaffeepulver ortsfest angeordnet sein, wobei ein zugehöriger Einfülltrichter auf dem Schlitten vorgesehen ist. Es ist natürlich auch möglich, mehrere Kaffeemühlen, bzw. einen oder mehrere Pulverbehälter o. dgl. dort anzuordnen. Der Einfülltrichter überbrückt den Abstand zwischen dem Auslauf der Kaffeemühle und der oberen Öffnung des Rohrabschnitts.

Nachfolgend wird ein bevorzugtes Ausführungsbeispiel beschrieben. Es zeigt:

Figur 1 einen Vertikalschnitt durch die wesentlichen Teile eines Kaffeemaschinenautomaten,

Figur 2 einen elektrischen und hydraulischen Schaltplan, der die Verbindung der einzelnen Teile verdeutlicht und

Figur 3 einen Schnitt durch den Kaffeemaschinenautomaten im Bereich des Brühraums mit dem Rohrabschnitt und dem oberen und unteren Verschlußstück.

Der Kaffeemaschinenautomat weist einen Durchlauferhitzer 1 auf, dessen Gehäuse aus einem Unterteil 2 und einem Deckelteil 3 besteht, die mit Hilfe einer Dichtung 4 und einer Anzahl von Befestigungsschrauben 5, die auf dem Umfang verteilt angeordnet sind, zusammengehalten werden. Im Innern des Gehäuses 2, 3 wird somit ein Innenraum 6 gebildet, in welchem eine Heizspirale 7 angeordnet ist, mit deren Hilfe das im Innenraum 6 befindliche Wasser aufgeheizt wird. Der Eintritt des Kaltwassers erfolgt über einen Stutzen 8, der an tiefster Stelle des Unterteils 2 vorgesehen ist.

In einer Ausbuchtung 9 des Gehäuses 2, 3 ist eine Brühvorrichtung 10 untergebracht. Die Brühvorrichtung 10 weist einen Rohrabschnitt 11 auf, der zylindermantelförmig ausgebildet ist und dessen Achse 12 vertikal angeordnet ist. Der Rohrabschnitt 11 ist vergleichsweise dünnwandig ausgebildet und mit Hilfe von Dichtungen 13 und 14 abgedichtet gegenüber dem Innenraum 6 in dem Gehäuse 2, 3 des Durchlauferhitzers 1 gelagert, wobei der Rohrabschnitt 11 zwischen dem Unterteil 2 und dem Deckelteil 3 aufgenommen und eingespannt ist. Weitere wesentliche Bestandteile der Brühvorrichtung 10 sind ein unteres kolbenartiges Verschlußstück 15 und ein oberes Verschlußstück 16. Der Rohrabschnitt 11 und die beiden Verschlußstücke 15 und 16 schließen einen Brühraum 17 ein, in welchem das Kaffeepulver, zu einer Tablette gepreßt, von dem Heißwasser durchströmt und dabei das Kaffeegetränk gebildet wird. Das untere Verschlußstück 15 weist eine Dichtung 18 auf, mit der es in dem Rohrabschnitt 11 abgedichtet verfahrbar ist. Das Verschlußstück 15 ist kolbenartig ausgebildet und besitzt ein Durchtrittssieb (83) für das Kaffeegetränk, wobei sich jenseits den Siebs ein Schlauch 19 anschließt, durch den das Kaffeegetränk zum Auslauf des Kaffeemaschinenautomaten gelangt. Mit dem kolbenartigen Verschlußstück 15 ist eine Kolbenstange 20 verbunden, auf der ein Hydraulikkolben 21 befestigt ist. Hierzu gehört ein Zylinder 22, der mit Hilfe eines Deckels 23 und entsprechender Dichtungen am Unterteil 2 des Durchlauferhitzers 1 befestigt ist. Es sind Anschlußstutzen 24 und 25 vorgesehen, so daß hier ein doppelt wirkender Antrieb gebildet ist, mit dessen Hilfe, je nach Einsteuerung von Hydraulikwasser an den Anschlußstutzen 24 oder 25 das untere Verschlußstück 15 in jede beliebige Relativlage in Richtung der Achse 12 verschoben und in jeder Stellung festgehalten werden kann. Das Verschlußstück ist in durchgezogener Linienführung in seiner untersten Stellung und in strichpunktierter Linienführung in einer Stellung dargestellt, in welcher das Kaffeepulver in dem Brühraum 17 zu einer Tablette vorgepreßt wird. Auch die zugehörige Stellung des Hydraulikkolbens 21 ist strichpunktiert verdeutlicht. Man erkennt leicht, daß je nach der Einsteuerung von Hydraulikwasser über die beiden Anschlußstutzen 24 und 25 in Kammern 26 bzw. 27 das untere Verschlußstück 15 in jede beliebige Höhenlage verschoben und eingesteuert werden kann. So ist es beispielsweise auch möglich, die Tablette aus ausgelaugtem Kaffeemehl nach- bzw. auszupressen und auch über den oberen Rand des Rohrabschnitts 11 hinaus anzuheben, um einen Trockenauswurf zu realisieren.

Das obere Verschlußstück 16 weist eine einzige Dichtung 28 auf und ist radial und axial verfahrbar angeordnet. Zu diesem Zweck ist die Oberseite des Deckelteils 3 des Durchlauferhitzers 1 als eine Gleitbahn 29 ausgebildet, auf der ein Schlitten 30 radial zur Achse 12 der Brühvorrichtung 10 verschiebbar ist. Für diese Verschiebung hin und her ist ein Radialantrieb 31 vorgesehen, durch den der Schlitten 30 und damit das obere Verschlußstück 16 gemäß einem Doppelpfeil 32 aus der durchgezogen dargestellten Parkstellung in eine Stellung oberhalb des Brühraums 17 verschiebbar ist. Auf dem Schlitten 30 ist ein Axialantrieb 33, der nur durch eine Achse angedeutet ist, vorgesehen. Dieser Axialantrieb 33 besteht aus einem kleinen Elektromotor, der eine Welle antreibt. Mit dieser Welle ist ein Exzenter 34 verbunden, so daß in der Stellung des Schlittens oberhalb des Brühraums 17 eine Schwenkbewegung gemäß Pfeil 35 dazu führt, daß der Tragteil 61 dee obereb Verschlußstücks 16 axial, also in Richtung der Achse 12 bis in die strichpunktiert dargestellte Verschlußstellung bewegt wird. Dabei setzt der Zentrierteil 68 des Verschlußstücks 16 mit seiner Dichtung 28 auf den oberen Rand des Rohrabschnitts 11 auf und verschließt den Brühraum 17 nach oben. Damit wird gleichzeitig das Gegenlager für jegliche Verdichtungsbewegungen durch das untere Verschlußstück 15 an der Brühvorrichtung 10 gebildet. Das obere Verschlußstück 16 ist ebenfalls mit einem Sieb 78 ausgestattet, so daß über einen Anschlußstutzen 36 Heißwasser aus dem Innenraum 6 des Durchlauferhitzers durch das Verschlußstück 16 hindurch in den Brühaum 17 gelangen kann, wo es durch die Tablette aus Kaffeepulver hindurchtritt und als Kaffeegetränk nach unten durch den Schlauch 19 in den Auslauf übertritt.

Über der Brühvorrichtung 10 ist eine Kaffeemühle 37 vorgesehen, deren Austrittsstutzen 38 für das gemahlene Kaffeepulver etwa in der Achse 12 oberhalb des Brühraums 17 endet. Mit dem Schlitten 30 ist ein Einfülltrichter 39 verbunden, der bewirkt, daß bei einem Mahlvorgang der Kaffeemühle 37 das über den Austrittsstutzen abgegebene Kaffeepulver im freien Fall in den Brühraum 17 gelangt und nicht etwa auf die Gleitbahn 29

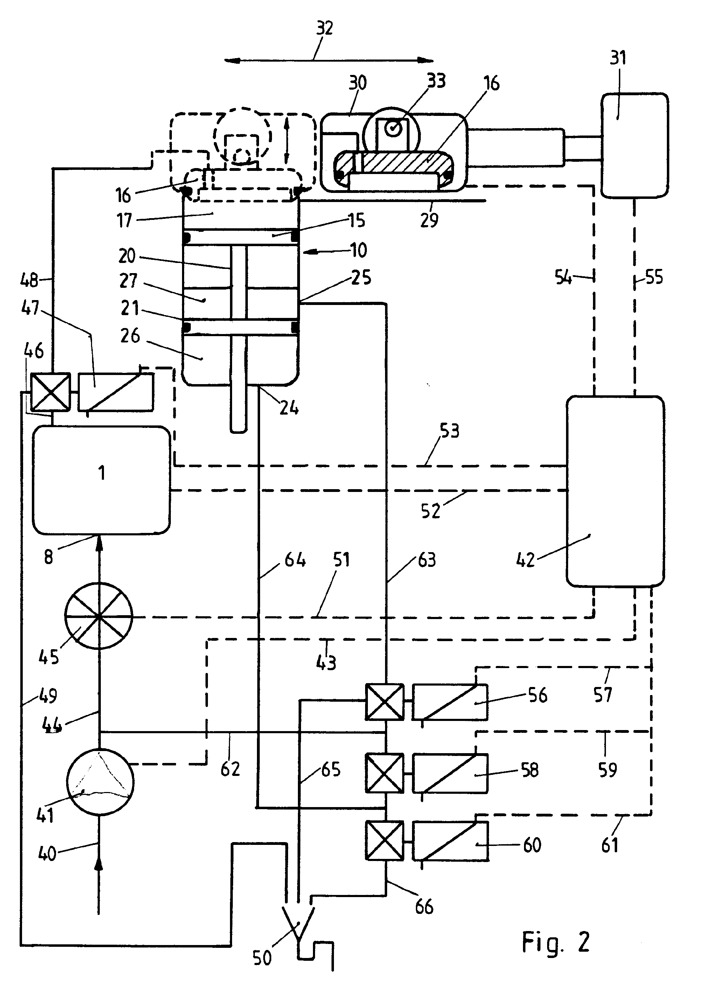

In Figur 2 ist ein Schaltplan mit den wesentlichen Teilen des Kaffeemaschinenautomaten dargestellt, wobei die hydraulischen Leitungen in durchgezogener Strichführung und die elektrischen leitungen in gestrichelter Linienführung angedeutet sind. Eine Kaltwasserleitung 40 führt zu einer Pumpe 41, die von einer elektronischen Steuervorrichtung 42 über eine elektrische Leitung 43 angesteuert wird. Eine Wasserleitung 44 führt von der Pumpe 41 zu einem Wasserdurchflußmesser 45 und von dort zu dem Stutzen 8 des Durchlauferhitzers 1. Von dem Durchlauferhitzer 1 führt eine Leitung 46 für Heißwasser zu einem Brühventil 47 und von dort als Leitung 48 durch das obere Verschlußstück 16 in den Brühraum 17. Das Brühventil 47 ist als Drei/Zwei-Wegeventil ausgebildet, wobei eine Leitung 49 zu einem Ablauf 50 führt. Von der elektrischen Steuervorrichtung führen eine elektrische Leitung 51 zu dem Wasserdurchlaufmesser 45, eine elektrische Leitung 52 zu der Heizspirale 7 des Durchlauferhitzers 1 sowie parallel geschaltete Leitungen zu einer Temperatursteuerung im Durchlauferhitzer 1, die der Übersichtlichkeit halber nicht dargestellt ist. Eine elektrische Leitung 53 steuert das Brühventil 47. Eine weitere Leitung 54 führt zum Axialantrieb 33, eine Leitung 55 zum Radialantrieb 31. Weiterhin ist ein Hydraulikventil 56, welches als Drei/Zwei-Wegeventil ausgebildet ist, über eine Leitung 57 ansteuerbar. Ein Hydraulikventil 58 wird über eine Leitung 59 gesteuert, und für ein Hydraulikventil 60 ist eine Leitung 61 vorgesehen. Die Hydraulikventile 58 und 60 sind als Zwei/Zwei-Wegeventile ausgebildet. Von der Wasserleitung 44 zweigt eine hydraulische Leitung 62 ab, an die die beiden Hydraulikventile 56 und 58 angeschlossen sind. Von dem Hydraulikventil 56 führt eine Leitung 63 zum Anschlußstutzen 25 und damit zur Kammer 27 des Hydraulikkolbens 21, während eine Leitung 64 in der dargestellten Weise zu dem Anschlußstutzen 24 und der Kammer 26 führt. Vom Hydraulikventil 56 führt eine Leitung 65 und vom Hydraulikventil 60 eine Leitung 66 zu dem Ablauf 50.

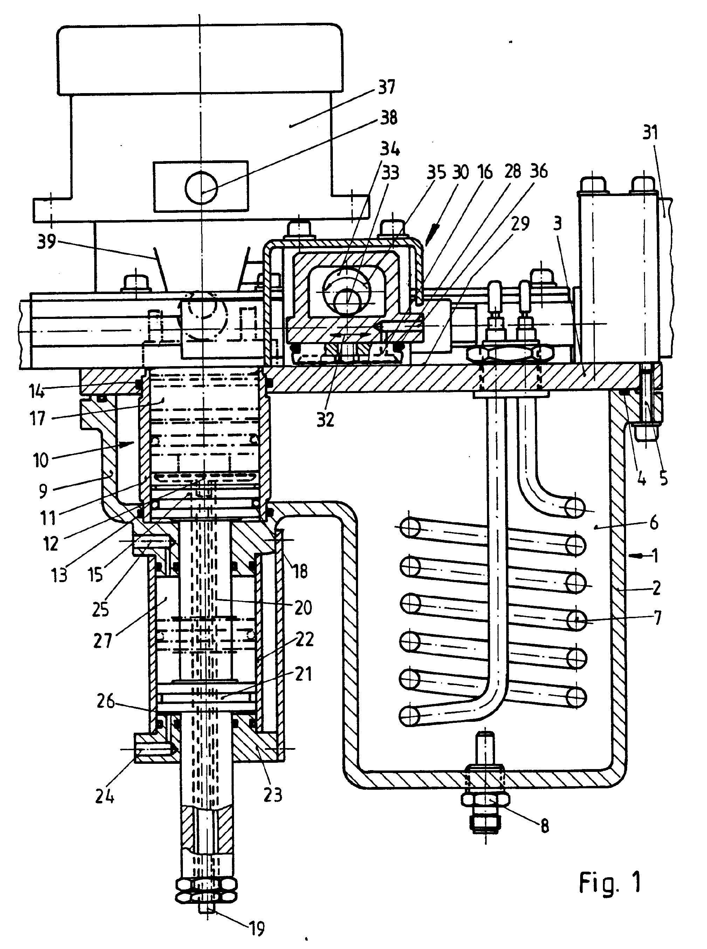

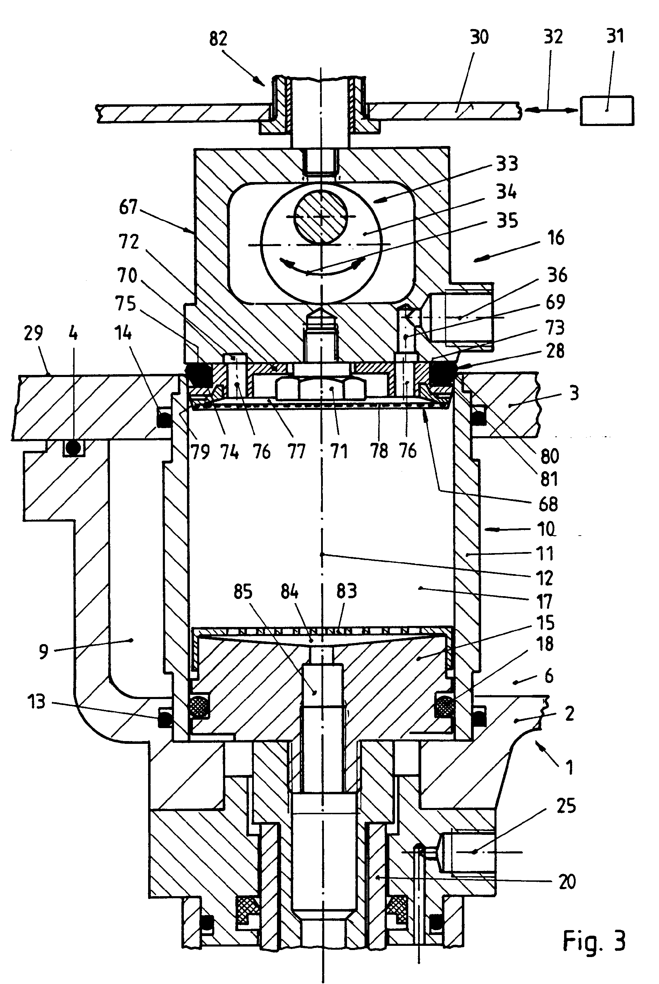

In Figur 3 ist ein Ausschnitt aus dem Kaffeemaschinenautomaten gemäß Figur 1 gezeigt, um den genauen Aufbau der Brühvorrichtung 10 mit ihren wesentlichen Teilen zu verdeutlichen. Der Rohrabschnitt 11 ist, wie bereits aus Figur 1 erkennbar war, mit Hilfe der Dichtungen 13 und 14 zwischen dem Unterteil 2 und dem Deckelteil 3 des Durchlauferhitzers 1 dichtend eingesetzt, so daß der Rohrabschnitt 11 in der Ausbuchtung 9 des Durchlauferhitzers 1 gelagert ist und so allseits von Heißwasser umgeben ist. Der Rohrabschnitt 11 ist mit seiner Achse 12 vertikal angeordnet. Der Deckelteil 3 schließt oben mit einer Gleitbahn 29 ab, auf der der Schlitten 30 mit Hilfe des hier nur schematisch dargestellten Linearantriebs 31 im Sinne des Doppelpfeils 32 radial zur Achse 12 verfahrbar ist, und zwar zwischen zwei Stellungen, der in Figur 1 dargestellten Parkstellung und der in Figur 3 dargestellten Schließstellung. Die Schließstellung wird natürlich nur dann erreicht, wenn, ausgehend

EP 0 379 651 B1

von der Parkstellung, zunächst der Radialantrieb 31 seinen Hub ausführt, damit das obere Verschlußstück 16 die Gleitbahn 29 nicht berührt. Ist die Stellung des Schlittens 30 in der Achse 12 erreicht, so wird nachfolgend der Axialantrieb 33, der mitfahrend auf dem Schlitten 30 angeordnet ist, in Tätigkeit gesetzt, wodurch der Exzenter 34 gemäß Pfeil 35 in die in Figur 3 dargestellte Stellung verschwenkt wird, so daß das gesamte obere Verschlußstück 16 dabei eine Vertikalbewegung in der Achse 12 ausführt.

Das obere Verschlußstück 16 ist zweiteilig ausgebildet. Es weist einen Tragteil 67 und einen Zentrierteil 68 auf. An dem Tragteil 67 befindet sich der Anschlußstutzen 36 für das dem Brühraum 17 zuzuführende Heißwasser. Eine Bohrung 69 endet in einer ringförmigen, umlaufend auf der dem Zentrierteil 68 zugekehrten Seite angeordneten Nut 70, die der Verteilung des Heißwassers über den Querschnitt dient.

Der Zentrierteil 68 ist an dem nach unten, also dem Brühraum 17 zugekehrten Teil konisch ausgebildet und über eine Anschlagschraube 71 mit begrenztem axialem und radialem Spiel gegenüber dem Tragteil 67 gelagert, so daß es beim Eintritt in den Rohrabschnitt 11 infolge der Vertikalbewegung durch den Axialantrieb 33 unabhängig von dem Tragteil 67 eine Selbstzentrierung zu der Achse 12 ausführen kann. Der Zentrierteil 68 weist einen Dichtungsträger 72 auf, der dem Tragteil 67 zugekehrt mit der Anschlagschraube 71 befestigt ist. Dieser Dichtungsträger 72 trägt auf seinem Umfang eine Nut 73 und in dieser die einzige Dichtung 28 des oberen Verschlußstücks 16. Die Nut 73 weist eine Fläche 74 auf, die einer Anlagefläche 75 an dem Tragteil 67 zugekehrt ist. Das axial vorgesehene Spiel zwischen dem Dichtungsträger 72 des Zentrierteils 68 und dem Tragteil 67 ist so groß bemessen, daß sich in der Transportstellung und während der Selbstzentrierung die Fläche 74 und die Anlagefläche 75 von der Dichtung 28 lösen. Erst in der Schließstellung, wie sie Figur 3 zeigt, kommen die Flächen 74 und 75 zur Anlage an die Dichtung 28, so daß das über den Anschlußstutzen 36 während der Brühphase zugeleitete Heißwasser nach außen abgedichtet ist. Der Dichtungsträger 72 weist Durchbrechungen 76 auf, die sich jeweils an die umlaufende Nut 70 im Tragteil 67 anschließen und zu einem Hohlraum 77 führen, der von dem Sieb 78 überspannt ist. Dieses Sieb 78 besitzt auf seinem Umfang eine konische Fläche 79, die in Verbindung mit dem oberen Rand 80 des Rohrabschnitts 11 die Selbstzentrierung herbeiführt. Das Sieb 78 ist durch einen Preßsitz an dem Dichtungsträger 72 gelagert.

Die Dichtung 28 erfüllt noch eine weitere Dichtfunktion. Sie besitzt eine kegelige Fläche 81, deren kleinster Durchmesser kleiner als der Innendurchmesser des Rohrabschnitts 11 und deren größter Durchmesser größer als dessen Innendurchmesser ausgebildet ist. Der obere Rand 80 des Rohrabschnitts 11 ist abgerundet gestaltet, so daß er als Ventilsitz mit der kegeligen Fläche 81 zusammenwirkt und den Brühraum 17 nach oben abschließt.

Es ist erkennbar, daß sich der Zentrierteil 68 im Laufe der durch den Axialantrieb 33 bewirkten Axialbewegung im Sinne eines Verschließens des Brühraums 17 zusammen mit dem Tragteil 67 abwärts bewegt, wobei die Flächen 74 und 75 nicht in Anlage zueinander sind. Dabei findet eine Selbstzentrierung statt, bei der die konische Fläche 79 durch den Rand 80 geführt wird und sich somit genau zentrisch in den Rohrabschnitt 11 einpaßt. Bei weiterer Abwärtsbewegung setzt die kegelige Fläche 81 auf den oberen Rand 80 des Rohrabschnitts 11 auf, wobei der Rand 80 gleichsam einen Ventilsitz und einen Anschlag für die Abwärtsbewegung des Zentrierteils 68 bildet. Bei weiterer Abwärtsbewegung verschwindet dann auch das axiale Spiel und die Fläche 75 sowie die Fläche 74 legen sich an die Dichtung 28 an, so daß dann die Schließstellung erreicht wird. Damit es bei dieser Abwärtsbewegung nicht zu einer Kippbewegung des Tragteils 67 und damit zu einem Verkanten innerhalb der Anlagefläche 75 kommt, sind ein oder mehrere Säulenführungen 82 zwischen dem Schlitten 30 und dem Tragteil 67 vorgesehen, so daß das Tragteil 67 eine präzise Vertikalbewegung bei Betätigung des Axialantriebs 33 ausführt, und zwar parallel zu der Achse 12. Man erkennt, daß die Dichtung 28 nicht in die Bohrung des Rohrabschnitts 11 einfährt, sondern sich lediglich auf den Rand 80 aufsetzt. Dies ist eine übliche Ventilfunktion, die das Material der Dichtung 28 weit weniger beansprucht als das Überfahren einer scharfen Kante oder das Einfahren in eine Bohrung.

Das untere Verschlußstück 15 ist nach Art eines Kolbens mit seiner Dichtung 18 im Bereich des Innendurchmessers des Rohrabschnitts 11 gelagert und wird ausschließlich vertikal und innerhalb des Rohrabschnitts 11 verfahren. Mit dem unteren Verschlußstück 15 ist ebenfalls ein Sieb 83 verbunden, dem ein Hohlraum 84 nachgeordnet ist, der in eine Bohrung 85 übergeht, die zu dem Schlauch 19 (Figur 1) führt, über den das Kaffeegetränk dem Auslauf zugeführt wird.

Die Funktion des Kaffeemaschinenautomaten wird in der Zusammenschau der Figuren wie folgt erläutert:

Bei der täglichen Inbetriebnahme des Kaffeemaschinenautomaten z. B. am Beginn einer Frühstückszeit o. dgl. wird die Steuervorrichtung 42 in Tätigkeit gesetzt. Das Brühwasser wird mit Hilfe der Heizspirale 7 erwärmt, wobei gleichzeitig auch die Brühvorrichtung 10 mit ihren wesentlichen Teilen aufgeheizt wird. Das untere Verschlußstück 16 befindet sich in der in durchgezogener Linienführung in Figur 1 dargestellten Stellung und wird demzufolge ebenfalls aufgeheizt, wobei der Rohrabschnitt 11 über den gesamten Umfang von sich erwärmendem Wasser umspült wird. Mit dem Aufheizen des Wassers werden auch das Unterteil 2 und das Deckelteil 3 des Gehäuses des Durchlauferhitzers 1 erwärmt, so daß auch das obere Verschlußstück 16, wel-

7

ches an dem Schlitten 30 vorgesehen ist, entsprechend warm wird. Wenn die Temperaturregeleinrichtung im Innenraum 6 des Durchlauferhitzers 1 anzeigt, daß das Wasser die erforderliche Temperatur angenommen hat, so weisen auch die wesentlichen Teile der Brühvorrichtung 10 die entsprechende Temperatur bereits auf und es ist die Betriebsbereitschaft des Kaffeemaschinenautomaten gegeben. Durch einen weiteren Schaltvorgang, der mechanisch an der Steuereinrichtung 42 ausgelöst wird, kann die erste Tasse oder ein Kännchen Kaffeegetränk zubereitet werden. Hierzu bleibt der Schlitten 30 (oder er fährt) und mit ihm das obere Verschlußstück 16 in der in Figur 1 durchgezogenen dargestellten Stellung, so daß der Einfülltrichter 39 zwischen den Austrittsstutzen 38 der Kaffeemühle 37 und dem nach oben offenen Brühraum 17 zu liegen kommt. Die Kaffeemühle 37, die in Figur 2 nicht dargestellt ist, wird ebenfalls über die Steuervorrichtung 42 für die zugehörige Zeiteinheit (Tasse oder Kännchen) in Gang gesetzt, so daß eine entsprechende Portion Kaffeepulver in den Brühraum 17 der Brühvorrichtung 10 hinabfällt. Sobald der Mahlvorgang beendet ist, steuert die Steuervorrichtung 42 den Radialantrieb 31 an, so daß der Schlitten 30 mit dem oberen Verschlußstück 16 entsprechend dem Doppelpfeil 32 in Figur 2 nach links verfahren wird, bis die Achse des Verschlußstücks 16 sich in der Achse 12 der Brühvorrichtung 10 befindet. In dieser Stellung endet der Radialantrieb 31 und der Axialantrieb 33 wird angesteuert, so daß sich der Zentrierteil 68 des oberen Verschlußstücks 16 am Rand 80 und am Innendurchmesser des Rohrabschnitts 11 selbst zentriert. Bei der weiteren gemeinsamen Abwärtsbewegung des Zentrierteils 68 und des Tragteils 67 in Richtung der Achse 12 setzt die Dichtung 28, die durch das Zentrierteil 68 ebenfalls zur Achse 12 zentriert wurde, mit ihrer kegeligen Fläche 81 auf dem oberen Rand 80 des Rohrabschnitts 11 auf, wobei der Rand 80 als Anschlag wirkt. Bei weiterer Abwärtsbewegung des Tragteils 67 relativ zu dem Zentrierteil 68 verschwindet auch das axiale Spiel zwischen der Fläche 74 und der Anlagefläche 75, so daß nunmehr die beiden Dichtspalte mehr oder weniger gleichzeitig geschlossen werden und damit über die einzige Dichtung 28 sowohl der Brühraum 17 als auch das Heißwasser nach außen abgedichtet sind. Der über den Axialantrieb 33 aufgebrachte Druck verteilt sich dabei über die beiden geschlossenen Dichtspalte und es wird die Stellung erreicht, die in Figur 3 dargestellt ist. Das Verschlußstück 16 mit dem Tragteil 67 und dem Zentrierteil 68 verbleibt nun für längere Zeit in Ruhe. Durch Ansteuerung des Hydraulikventils 58 gelangt Kaltwasser in die Kammer 26 und hebt damit nicht nur den Hydraulikkolben 41, sondern mit ihm das untere Verschlußstück 15 an, so daß das lose eingefüllte Kaffeepulver zu einer Tablette verdichtet wird. Bei dieser Bewegung wird über das geöffnete Hydraulikventil 56 (stromlos) Wasser aus der Kammer 27 über die Leitung 63 und 65 verdrängt. Sobald das Vorpressen der Tablette aus Kaffeepulver geschehen ist, werden die Hydraulikventile 56 und 58 kurzzeitig umgesteuert, so daß die Tablette entlastet wird und sowohl der Hydraulikkolben 21 wie auch das untere Verschlußstück 15 nahe in der in Figur 1 dargestellten strichpunktierten Stellung stillgesetzt werden. In dieser Stellung kann der eigentliche Brühvorgang beginnen, indem auch hier die Pumpe 41 über die Leitung 51 und auch das Brühventil 47 über die Leitung 53 angesteuert werden. Mit dem Wasserdurchflußmesser 45 wird eine der gewünschten Menge des Kaffeegetränks entsprechende Wassermenge an Frischwasser in den Innenraum 6 des Durchlauferhitzers eingebracht und eine entsprechende Menge Heißwasser über die Leitung 48 durch das obere Verschlußstück 16 und über das Sieb 78 verteilt in den Brühraum 17 eingebracht, wo die Tablette aus Kaffeepulver durchdrungen und das Kaffeegetränk über den Schlauch 19 am Auslauf abgegeben wird. Gegen Ende des Durchlaufs des Heißwassers durch den Brühraum 17 wird das Brühventil 47 wieder geschlossen, wobei durch Ansteuerung des Hydraulikventils 58 ein Nachpressen bzw. Trockenpressen der Kaffeepulvertablette erfolgt. Damit endet dann der Auslauf des Kaffeegetränks. Nach entsprechender Entlastung des unteren Verschlußstücks 15 wird das obere Verschlußstück 16 geöffnet und hinweggefahren, indem nacheinander der Axialantrieb 33 und der Radialantrieb 31 von der Steuervorrichtung 42 angesteuert werden. Sobald der obere Rand 80 des Rohrabschnitts 11 frei ist, kann das Hydraulikventil 58 in dem Sinne angesteuert werden, daß die Tablette aus ausgelaugtem Kaffeepulver so weit angehoben wird, daß die Querkante des unteren Verschlußstücks 15 mit der Oberkante des Deckelteils 3 fluchtet bzw. in der Gleitbahn 29 liegt. Durch Betätigung des Radialantriebs 31 und mit Hilfe des Schlittens 30 wird die trockene Kaffeepulvertablette dann auf der Gleitbahn 29 seitlich hinweggefördert, indem sie durch den Schlitten 30 geschoben wird. Anschließend werden die Hydraulikventile 56 und 60 angesteuert, so daß kaltes Wasser über die Leitung 63 in die Kammer 27 geschickt wird, wobei das untere Verschlußstück 15 wieder nach unten fährt. Das in der Kammer 26 befindliche Wasser wird über die Leitungen 64 und 66 in den Ablauf 50 überführt. Ein neuer Brühvorgang kann sich dann anschließen.

Es sei darauf hingewiesen, daß die Steuereinrichtung 42 und die verschiedenen Hydraulikventile 47, 56, 58 und 60 sowie die übrigen Einzelheiten der Vorrichtung es gestatten, beliebige Zwischenschritte anzusteuern und weitere Maßnahmen mit ein und derselben Vorrichtung durchzuführen. So ist es beispielsweise vorstellbar, daß die Kaffeepulvermenge für ein Kännchen Kaffeegetränk größer sein muß als die Kaffeepulvermenge für eine Tasse Kaffeegetränk, was durch entsprechende zeitliche Steuerung der Kaffeemühle 37 und auch durch eine entsprechende Wegsteuerung des unteren Verschlußstücsk 15 relativ zum oberen Verschlußstück 16 bewirkt wird. Dabei kann im Sinne einer gleichbleibenden Qualität des Kaffeegetränks bei einem Kännchen Kaffee eine etwas geringere Kaffeepulvermenge eingesetzt werden, als es der doppelten Menge an Kaffeepulver für eine Tasse entspricht.

**Patentansprüche**

1. Kaffeemaschinenautomat, insbesondere für Einzeltassen- und Kännchenfertigung, mit einem ein Gehäuse aufweisenden Durchlauferhitzer (1) für die Bereitstellung von Heißwasser, mit einer Einrichtung zur Zufuhr von Kaffeepulver, mit einer Brühvorrichtung, die einen aus einem stationär mit vertikaler Achse angeordneten Rohrabschnitt (11) sowie zwei Verschlußstücken gebildeten Brühraum (17) aufweist, der zumindest teilweise in dem Durchlauferhitzer angeordnet ist und bei dem zumindest ein Teil des Rohrabschnitts des Brühraums von dem Heißwasser des Durchlauferhitzers umspült ist, und mit einem Axialantrieb (33) für die Bewegung des oberen Verschlußstücks in Richtung der Achse des Rohrabschnitts sowie einem Radialantrieb (31) für die Bewegung radial zu dieser Achse, dadurch gekennzeichnet, daß das obere Verschlußstück (16) den Einlaß für das Heißwasser in den Brühraum (17) trägt, daß das obere Verschlußstück (16) zweiteilig ausgebildet ist und aus einem Tragteil (67) und einem zumindest teilweise kegelförmigen Zentrierteil (68) besteht, der eine einzige Dichtung (28) für den Abschluß des Brühraums (17) einerseits sowie für die Abdichtung des Einlasses des Heißwassers andererseits trägt, daß der Zentrierteil (68) an dem Tragteil (67) sowohl axial als auch radial begrenzt beweglich gelagert ist, daß die Dichtung (28) einen solchen Durchmesser aufweist und in Abstimmung auf den oberen Rand (80) des Rohrabschnitts (11) so ausgebildet ist, daß bei Betätigung des an dem Tragteil (67) angreifenden Axialantriebs (34) sich die Dichtung (28) nach ihrer Zentrierung durch den Zentrierteil (68) auf den oberen Rand (80) als Anschlag und Ventilsitz aufsetzt und dabei gleichzeitig der Brühraum (17) einerseits und der Einlaß des Heißwassers andererseits abdichtet, und daß das untere Verschlußstück (15) nach Art eines Kolbens ausgebildet ist und mit seiner Dichtung (18) ausschließlich innerhalb des Rohrabschnitts (11) durch einen Vertikalantrieb verfahrbar vorgesehen ist.

2. Kaffeemaschinenautomat nach Anspruch 1, dadurch gekennzeichnet, daß das obere Verschlußstück (16) mit seinem Tragteil (67) auf einem Schlitten (30) gelagert und über den Radialantrieb (31) über die Öffnung des Rohrabschnitts (11) bzw. radial weg von dieser Öffnung verfahrbar ist.

3. Kaffeemaschinenautomat nach Anspruch 2, dadurch gekennzeichnet, daß der Axialantrieb (33) und der Radialantrieb (31) voneinander unabhängig sind, wobei der Axialantrieb (33) auf dem Schlitten (30) und damit radial mitfahrend vorgesehen ist.

4. Kaffeemaschinenautomat nach Anspruch 1, dadurch gekennzeichnet, daß der Tragteil (67) auf seiner dem Zentrierteil (68) zugekehrten Seite eine umlaufende Nut (70) für die Verteilung des Heißwassers aufweist, die an mehrere Durchbrechungen (76) im Zentrierteil (68) anschließt, und daß das Zentrierteil (68) auf seiner dem Brühraum (17) zugekehrten Seite ein Sieb (78) für den Übertritt des Heißwassers in den Brühraum (17) trägt.

5. Kaffeemaschinenautomat nach Anspruch 1, dadurch gekennzeichnet, daß der obere Rand (80) des Rohrabschnitts (11) des Brühraums (17) abgerundet und die zugehörige Fläche (81) der Dichtung (28) kegelförmig ausgebildet sind.

6. Kaffeemaschinenautomat nach Anspruch 1 und 2, dadurch gekennzeichnet, daß der Axialantrieb (33) des oberen Verschlußstücks (16) einen Exzenter (34) aufweist und zwischen dem Schlitten (30) und dem Tragteil (67) ein oder mehrere Säulenführungen (82) parallel zur Achse (12) des Rohrabschnitts (11) vorgesehen sind.

7. Kaffeemaschinenautomat nach Anspruch 1 und 4, dadurch gekennzeichnet, daß der Zentrierteil (68) einen Dichtungsträger (72) aufweist, der die Durchbrechungen (76) für den Durchtritt des Heißwassers trägt, über eine Anschlagschraube (71) mit radialem und axialem Spiel an dem Tragteil (67) gelagert ist und das Sieb (78) aufnimmt.

8. Kaffeemaschinenautomat nach Anspruch 1, dadurch gekennzeichnet, daß der Vertikalantrieb des unteren Verschlußstücks (15) einen doppelt wirkenden Hydraulikkolben (21) aufweist, durch den die Lage des unteren Verschlußstücks (15) relativ zu dem oberen stillstehenden Verschlußstück (16) entsprechend allen Arbeitsstellungen wie Befüllen mit Kaffeepulver, Vorpressen einer Tablette aus Kaffeepulver, Entspannen, Brühen, Auspressen und Ausschieben der Tablette eingestellt wird.

9. Kaffeemaschinenautomat nach Anspruch 8, dadurch gekennzeichnet, daß der den Brühraum (17) bildende Rohrabschnitt (11) im Unterteil (2) des Gehäuses des Durchlauferhitzers (1) vorgesehen ist und an dem unteren Verschlußstück (15) der Auslaß für das Kaffeegetränk vermittels eines Schlauchs (19) angeschlossen ist.

10. Kaffeemaschinenautomat nach Anspruch 1 und 2, dadurch gekennzeichnet, daß oberhalb des Brühraums (17) eine Kaffeemühle (37) als Einrichtung zur Zufuhr von Kaffeepulver ortsfest angeordnet ist, und daß ein zugehöriger Einfülltricher (39) auf dem Schlitten (30) vorgesehen ist.

**Claims**

1. Coffee maker, in particular for producing individual cups and pots, having a continuous flow heater (1) exhibiting a housing for the provision of hot water, having a device for the supply of coffee powder, having a brewing device exhibiting a brewing chamber (17) formed from a tube section (11), which is stationary and has a vertical axis, and from two locking pieces, which brewing chamber is disposed at least partly in the continuous flow heater and in respect of which at least one part of the tube section of the brewing chamber is rinsed by the hot water of the continuous flow heater, and having an axial drive mechanism (33) for moving the upper locking piece in the direction of the axis of the tube section and a radial drive mechanism (31) for the movement radial to this axis, characterised in that the upper locking piece (16) bears the inlet for the hot water into the brewing chamber (17), in that the upper locking piece (16) is configured in two parts and comprises a bearing part (67) and an at least partly conical centring part (68), which bears a single seal (28) for, on the one hand, closing off the brewing chamber (17) and, on the other hand, sealing off the inlet for the hot water, in that the centring part (68) is mounted so as to be movable to a limited extent both axially and radially on the bearing part (67), in that the seal (28) exhibits such a diameter and is configured to match the upper edge (80) of the tube section (11) such that, when the axial drive mechanism (34) acting on the bearing part (67) is actuated, the seal (28), following its centring by the centring part (68), sits on the upper edge (80) as a stop and valve-seat and, in so doing, simultaneously seals off the brewing chamber (17), on the one hand, and the inlet for the hot water, on the other hand, and in that the lower locking piece (15) is configured in the manner of a piston and is designed such that it can be transported, with its seal (18), exclusively within the tube section (11) by a vertical drive mechanism.

2. Coffee maker according to Claim 1, characterised in that the upper locking piece (16) with its bearing part (67) is mounted on a carriage (30) and can be transported by the radial drive mechanism (31) over the opening of the tube section (11) or radially away from this opening.

3. Coffee maker according to Claim 2, characterised in that the axial drive mechanism (33) and the radial drive mechanism (31) are mutually independent, the axial drive mechanism (33) being provided on the carriage (30) and hence being carried along in the radial direction.

4. Coffee maker according to Claim 1, characterised in that the bearing part (67), on its side facing the centring part (68), exhibits a circumferential groove (70) for distributing the hot water, which groove connects up to a plurality of perforations (76) in the centring part (68), and in that the centring part (68), on its side facing the brewing chamber (17), bears a sieve (78) for the passage of the hot water into the brewing chamber (17).

5. Coffee maker according to Claim 1, characterised in that the upper edge (80) of the tube section (11) of the brewing chamber (17) is of rounded configuration and the associated surface (81) of the seal (28) is of conical configuration.

6. Coffee maker according to Claim 1 and 2, characterised in that the axial drive mechanism (33) of the upper locking piece (16) exhibits an eccentric (34) and one or more column guides (82) are provided between the carriage (30) and the bearing part (67), parallel to the axis (12) of the tube section (11).

7. Coffee maker according to Claim 1 and 4, characterised in that the centring part (68) exhibits a seal carrier (72), which bears the perforations (76) for the passage of the hot water, is mounted with radial and axial play, by means of a stop screw (71), on the bearing part (67) and holds the sieve (78). ,

8. Coffee maker according to Claim 1, characterised in that the vertical drive mechanism of the lower locking piece (15) exhibits a double-acting hydraulic piston (21), by which the position of the lower locking piece (15) relative to the upper stationary locking piece (16) is adjusted in accordance with all working settings, such as filling with coffee powder, pre-pressing of a coffee powder tablet, detensioning, brewing, pressing-out and pushing-out of the tablet.

9. Coffee maker according to Claim 8, characterised in that the tube section (11) forming the brewing chamber (17) is provided in the bottom part (2) of the housing of the continuous flow heater (1) and the outlet for the coffee drink is connected by means of a hose (19) to the lower locking piece (15).

10. Coffee maker according to Claim 1 and 2, characterised in that a coffee mill (37), as a device for supplying coffee powder, is disposed in fixed position above the brewing chamber (17), and in that an associated filling funnel (39) is provided on the carriage (30).

## Revendications

1. Machine à café automatique, en particulier pour la préparation de tasses individuelles et de petits pots, avec un chauffe-eau instantané (1) présentant un boîtier, pour la mise à disposition d'eau très chaude, avec un dispositif d'alimentation en café moulu, avec un dispositif d'infusion qui présente un tronçon de tube (11) stationnaire disposé selon un axe vertical, ainsi qu'une chambre d'infusion (17) formée par deux pièces d'obturation, qui est disposée au moins en partie dans le chauffe-eau instantané, et dans laquelle au moins une partie du tronçon de tube de la chambre d'infusion est entourée par une circulation d'eau très chaude du chauffe-eau instantané, et avec un mécanisme d'entraînement axial (33) pour le mouvement de la pièce d'obturation supérieure dans le sens de l'axe du tronçon de tube ainsi qu'un mécanisme d'entraînement radial (31) pour le mouvement radial par rapport à cet axe, caractérisée en ce que la pièce d'obturation supérieure (16) porte le raccord d'entrée de l'eau chaude dans la chambre d'infusion (17), en ce que la pièce d'obturation supérieure (16) est en deux parties et se compose d'un élément porteur (67) et d'un élément de centrage (68) au moins partiellement conique qui porte un joint d'étanchéité (28) unique pour l'obturation de la chambre d'infusion (17), d'une part, et pour l'étanchéité de l'admission de l'eau chaude, d'autre part; en ce que l'élément de centrage (68) est monté sur l'élément porteur (67) en étant mobile, de manière limitée, aussi bien axialement que radialement, en ce que le joint (28) présente un diamètre tel, et une conformation adaptée au bord supérieur (80) du tronçon de tube (11) telle que, lors de la mise en action du mécanisme d'entraînement axial (34) agissant sur l'élément porteur (67), le joint (28) vient s'appliquer, après son centrage par l'élément de centrage (68), sur le bord supérieur (80) en tant que butée et siège de soupape, et assure ainsi simultanément l'étanchéité de la chambre d'infusion (17), d'une part, et celle de l'admission de l'eau chaude, d'autre part; et en ce que la pièce d'obturation inférieure (15) est conformée à la manière d'un piston et est prévue pour être entraînée avec son joint d'étanchéité (18) exclusivement à l'intérieur du tronçon de tube (11) par un mécanisme d'entraînement vertical.

2. Machine à café automatique selon la revendication 1, caractérisée en ce que la pièce d'obturation supérieure (16) est montée avec son élément porteur (67) sur un coulisseau (30) et peut être entraînée par le mécanisme d'entraînement radial (31) sur l'ouverture du tronçon de tube (11) et être écartée radialement à distance de cette ouverture.

3. Machine à café automatique selon la revendication 2, caractérisée en ce que le mécanisme d'entraînement axial (33) et le mécanisme d'entraînement radial (31) sont indépendants l'un de l'autre, le mécanisme d'entraînement axial (33) étant prévu sur le coulisseau (30) et l'accompagnant de ce fait dans son mouvement radial.

4. Machine à café automatique selon la revendication 1, caractérisée en ce que l'élément porteur (67) présente, sur sa face tournée vers l'élément de centrage (68), une gorge périphérique (70) pour la répartition de l'eau chaude, qui se raccorde à plusieurs orifices (76) dans l'élément de centrage (68), et en ce que l'élément de centrage (68) porte, sur sa face tournée vers la chambre d'infusion (17), un tamis (78) pour l'introduction de l'eau chaude dans la chambre d'infusion (17).

5. Machine à café automatique selon la revendication 1, caractérisée en ce que le bord supérieur (80) du tronçon de tube (11) de la chambre d'infusion (17) est arrondi et que la surface correspondante (81) du joint étanche (28) est de forme conique.

6. Machine à café automatique selon les revendications 1 et 2, caractérisée en ce que le mécanisme d'entraînement axial (33) de la pièce d'obturation supérieure (16) présente un excentrique (34) et qu'entre le coulisseau (30) et l'élément porteur (67) sont prévues une ou plusieurs colonnettes de guidage (82) parallèlement à l'axe (12) du tronçon de tube (11).

7. Machine à café automatique selon les revendications 1 et 4, caractérisée en ce que l'élément de centrage (68) présente un support de joint (72) qui porte les orifices (76) pour le passage de l'eau chaude, qui est monté sur l'élément porteur (67) avec du jeu radial et axial, au moyen d'une vis de butée (71), et qui reçoit le tamis (78).

8. Machine à café automatique selon la revendication 1, caractérisée en ce que le dispositif d'entraînement vertical de la pièce d'obturation inférieure (15) présente un piston hydraulique (21) à double effet, au moyen duquel la position de la pièce d'obturation inférieure (15) est réglée, par rapport à la pièce d'obturation supérieure (16) se trouvant immobile, en correspondance avec toutes les positions de travail, telles que le remplissage en café moulu, la compression préalable d'une tablette de café moulu, le desserrage, l'infusion, l'expulsion et l'évacuation de la tablette.

9. Machine à café automatique selon la revendication 8, caractérisée en ce que le tronçon de tube (11) constituant la chambre d'infusion (17) est prévu dans la partie inférieure (2) du boîtier du chauffe-eau instantané (1) et en ce que l'orifice de sortie du breuvage de café est raccordé à la pièce d'obturation (15) au moyen d'un tuyau souple (19).

10. Machine à café automatique selon les revendications 1 et 2, caractérisée en ce qu'un moulin à café (37) est disposé à poste fixe au-dessus de la chambre d'infusion (17) en tant que dispositif d'alimentation en café moulu, et en ce qu'un entonnoir de remplissage (39) correspondant est prévu sur le coulisseau (30).

Fig. 1

Fig. 2

Fig. 3